# EUROPEAN PATENT APPLICATION

(11) **EP 2 933 984 A1**
(43) Date of publication of application: **21.10.2015**
(21) Application number: 14001380.6
(22) Date of filing: 15.04.2014
(51) Int. Cl.: H04L 29/12, H04W 8/26

(54) **SIM/UICC DNS client for DNS resolution**

(71) Applicant: Giesecke & Devrient GmbH, 81677 München (DE)
(72) Inventor: Nilsson, Per, 13673 Vendelsön (SE)

(57) **Abstract**

A method for setting up a communication connection between a security element (10) within a mobile end device and an external server, wherein the external server is identified via an FQDN, comprises the following steps: In the security element (10) a DNS client is made available. Employing the DNS client, the FQDN is resolved (S2, S3, S4, S5) into at least one IP address. On the basis of one of the at least one IP address a communication connection between the security element (10) and the external server is set up (S6, S7).

## Description

The present invention relates to a method for setting up a communication connection between a security element within a mobile end device and an external server, and to a corresponding security element and a mobile end device having such a security element.

Security elements of the stated kind, in particular SIM/UICC mobile radio cards, which can be fixedly or removably integrated in corresponding mobile end devices, such as for example smartphones, can be serviced via an over-the-air interface (OTA), for example by an operator of a mobile radio network. On the other hand, applications on the security element can also request data or the like from the operator or another external server via the over-the-air interface.

A direct communication between a security element within a mobile end device and a corresponding background system, for example an external server of an operator of a mobile radio network, can be effected by means of the BIP protocol ("bearer independent protocol") according to TS 102 223. This protocol, which is based on different proactive commands, enables a security element within a mobile end device to enter into data communication with the background system via carriers supported by the end device, for example Bluetooth, IrDA, GPRS, 3G, etc. According to a first scenario ("push"), the background system initiates such a data communication in order for example to install or update data or applications on the security element. In a second scenario ("pull"), the data communication is launched by the security element.

The current BIP standard only allows a communication partner with which a data communication is to be set up to be identified by means of an IP address. It cannot be done by alternatively inputting an FQDN ("fully qualified domain name"). This can lead to problems in several cases. For example, if an application on the security element wishes to set up a data communication with an external server, the application must know the server's current IP address. But it may be that this IP address is no longer valid or that the server is temporarily or permanently no longer available under this IP address. Further, it is possible that the server is addressable via a plurality of IP addresses which, for example, are all supposed to be used, and not just one, for load-balancing reasons. The security element cannot resolve such problems, i.e. obtain currently valid IP addresses, on the basis of the server's FQDN, however, because the security element cannot set up a data communication with the server on the basis of the FQDN in order to request corresponding information.

The object of the present invention is therefore to propose a method for setting up a communication connection between a security element within a mobile end device and an external server that takes the hereinabove described disadvantages into account.

This object is achieved by a method, a security element and a mobile end device having the features of the independent claims. Advantageous embodiments and developments are stated in the dependent claims.
The present invention is based on the idea of implementing within the security element a DNS client which can support a DNS name resolution in a manner to be described hereinafter.

The DNS protocol is employed in the known manner to resolve an FQDN into an IP address. The DNS protocol is part of the basic IP infrastructure of the Internet. The DNS system comprises a distributed database. Several requests to this database may be necessary for obtaining a desired answer, i.e. one or more IP addresses associated with an FQDN. A DNS client (also referred to as a "stub resolver") is an application that is arranged to entrust a DNS server (also referred to as a "name server") with the task of answering these questions. Further, the DNS client is arranged to receive the corresponding answers and suitably process them further or pass them on.

A preferred embodiment of a method for setting up a communication connection between a security element within a mobile end device and an external server, wherein the external server is identified via an FQDN, comprises the following steps:
In the security element a DNS client is made available.

Employing the DNS client, the FQDN is resolved into at least one IP address.

On the basis of one of the at least one IP address a communication connection between the security element and the external server is finally set up.

In this manner, the hereinabove explained problems can be completely solved. A data communication between the security element and an arbitrary external server can thus no longer only be set up on the basis of an IP address of the server, but also on the basis of an FQDN designating the server. Due to the fact that the DNS client is provided within the security element, conventional mobile end devices can continue to be employed unchanged. It is also unnecessary to adapt any functionalities of the server. A further advantage of the invention is that it is left to the security element to make a selection, according to its own criteria, of an IP address from a plurality of IP addresses associated with an FQDN. Finally, the security element can itself manage a DNS cache to be described more closely hereinafter, i.e. in particular also delete entries, for example in reaction to failed attempts at setting up a communication connection.

According to a first preferred variant, the DNS client resolves the FQDN on the basis of information that is stored in a DNS cache present within the security element. The DNS cache within the security element has substantially the form of a conventional DNS cache, i.e. it can comprise for an FQDN the associated IP address or addresses, and for each IP address a respective TTL ("time to live") entry. A TTL entry corresponds to an expiry date indicating how long the corresponding IP address can be regarded as valid.

Further, the DNS cache can comprise pre-stored information on given FQDNs. In this manner it is possible to avoid a hereinafter described data communication for resolving the FQDN that can be set up between the security element and a DNS server. An additional advantage is the fast availability of the data from the DNS cache.

According to a second preferred variant, the DNS client resolves the FQDN by the DNS client sending a DNS request to a DNS server. This variant is chosen when no information on the FQDN is stored in the DNS cache or when the information stored there is outdated - which, as mentioned, is recognizable by corresponding TTL entries. IP addresses received from the DNS server following the DNS request can be stored by the DNS client together with the FQDN in the DNS cache of the security element and/ or be directly processed.

The DNS request can be sent by the security element to the DNS server via a BIP channel. The DNS client preferably supports both of the protocols basically employable for a data communication between the mobile end device and the external server, UDP and TCP.

Preferably, there are stored in the security element IP addresses of at least one DNS server, particularly preferably of at least two DNS servers, The DNS client can make use of these IP addresses to address the DNS request. Alternatively, the IP addresses could be stored in the UICC configuration, i.e. outside any applet, or in the application.

In case a plurality of IP addresses are stored for the FQDN in the DNS cache, or in case the DNS request yields a plurality of IP addresses for the FQDN, the security element selects one IP address from the plurality of IP addresses according to given criteria. This selection can be effected in dependence on the current application and in a manner appearing optimal for the security element.

A first preferred criterion is the so-called "freshness" of an IP address, i.e. the question of how current the IP address can be regarded as being. This can be read from the TTL entry associated with the IP address. It is basically preferable to employ those IP addresses that are regarded as "fresh", i.e. whose expiry date will not soon be reached.

Alternatively, or in case a plurality of IP addresses associated with an FQDN are to be equally rated in terms of "freshness", an IP address can be selected from the plurality of IP addresses on the basis of an intelligent selection method, for example a round-robin method.

According to a preferred embodiment of the described method, a communication connection between the security element and the external server is set up by an application on the security element by means of an HTTP(S) request.

A security element according to the invention for a mobile end device therefore comprises a DNS client and a non-volatile memory for including a DNS cache. The security element is arranged to carry out a hereinabove described method for setting up a communication connection between the security element and an external server.

The security element can, according to a first preferred embodiment, be arranged to be integrated into a mobile end device removably. Examples of such security elements are in particular conventional SIM/UICC mobile radio cards.

According to a second preferred embodiment, the security element can be configured as an integral part of a mobile end device, i.e. be fixedly integrated within the mobile end device. Such security elements can likewise perform the function a mobile radio card. Likewise included here are security elements constituted by suitable software means and/ or hardware means in the end device, for example in the form of a TEE, i.e. a so-called "trusted execution environment" according to the "GlobalPlatform" specification.

An end device according to the invention comprises at least one security element of the hereinabove described kind.

The present invention will be described hereinafter by way of example with reference to the attached drawings. Therein are shown:
- Figure 1: a preferred embodiment of a security element according to the invention, and
- Figure 2: steps of a preferred embodiment of a method according to the invention.

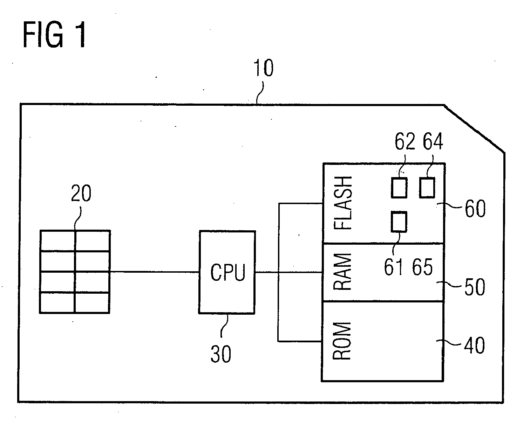

Referring to Figure 1, a security element 10 in the form of a UICC mobile radio card 10 is shown by way of example. This mobile radio card 10 is arranged to be integrated removably into a mobile end device, for example a smartphone (not shown). The hereinafter described functionalities of the security element 10 can also be present in the same manner in a security element fixedly integrated within a mobile end device.

The security element 10 comprises a contact-based data communication interface 20 in the form of a contact pad, for example according to ISO 7816. This data communication interface 20 serves for data communication with the mobile end device.

The data communication interface 20 is connected to a processor (CPU) 30 of the security element 10. The CPU 30 is for its part connected to different memories 40, 50, 60 of the security element 10. A non-volatile, non-rewritable ROM memory 40 can store at least portions of an operating system of the security element 10. The volatile, rewritable RAM memory 50 serves as a working memory for the security element. In the non-volatile, rewritable memory 60, which can be configured for example as a flash memory, there can be stored applications, such as for example a hereinafter described applet 61 and a DNS client application 62. Further, applications and auxiliary data can be stored in the memory 60, for example in a portion 64 which serves as a DNS cache.

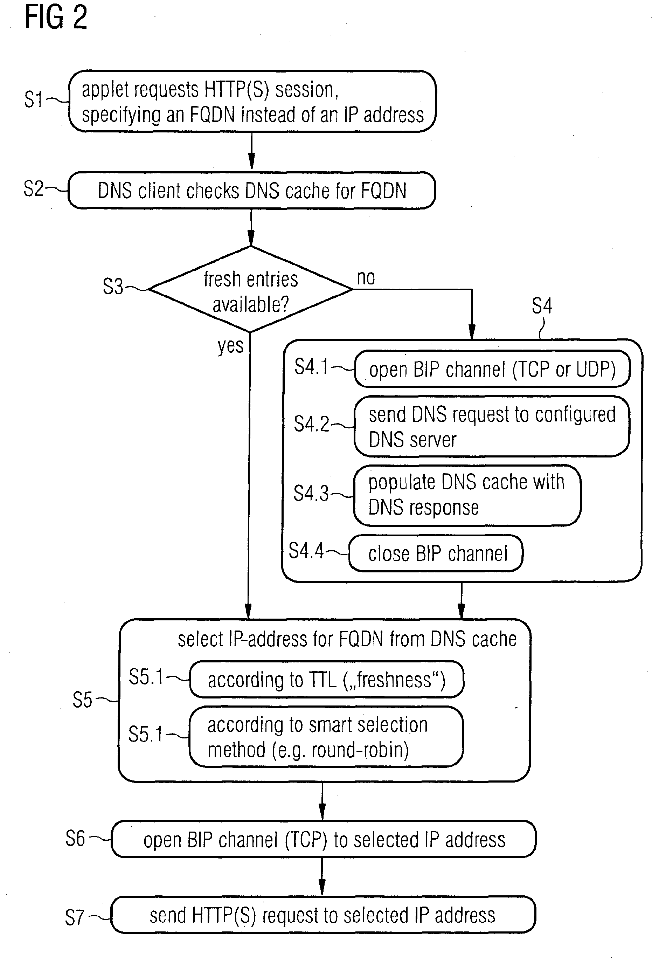

Referring to Figure 2, there will hereinafter be described, by way of example, steps of a method for setting up a communication connection between the security element 10 which is integrated within a mobile end device and an external server. In the described example, the server is to be a server of an operator of a mobile radio network, and the data communication serves to update the applet 61 via an over-the-air (OTA) interface. The update is initiated by the applet 61.

The data communication is launched by the applet 61 in step S1 through an HTTPS request to set up a data communication connection with the external server. The server is identified by the applet 61 here through an FQDN and not by means of an IP address.

According to the "GlobalPlatform" specification, functionalities for setting up such a communication connection are known. However, it is provided there to address the server by means of a concrete IP address. These functionalities may be extended so as to involve, referring to the present example, providing a further parameter that allows the server to be identified by an FQDN. In other words, specifications that are present, for example a "requestHTTPAdministrationSession" method according to the "GlobalPlatform" specification, are only extended by this entry, without endangering a compatibility with existing methods.

Further, it can be provided to extend the parameters defining the setting up of such a data communication, for example according to the hereinabove mentioned "GlobalPlatform" method, by a further parameter. This parameter can specify one or more IP addresses of DNS servers. This entry is of relevance when the external server, as explained hereinabove, is not addressed via an IP address, but rather the applet specifies an FQDN therefor. To be able to resolve the FQDN, a hereinafter described DNS client might have to contact a DNS server. For this purpose the DNS client requires a valid IP address of a DNS server. Preferably, there are stored in the security element at least two IP addresses of DNS servers, which can then be delivered by way of the described, additional parameter. In case a selection of a DNS server from a plurality of DNS servers is necessary, a routine can be implemented with which preferred DNS servers can be specified. For instance a primary and a secondary DNS server could be specified.

The FQDN specified in the HTTPS request is resolved by a DNS client 62, as shown with reference to step S2. The DNS client 62, which is also designated a "stub resolver", is implemented within the security element 10. A stub resolver is a minimal resolver requiring a DNS server to support recursive queries.

First, the DNS client 62 checks whether the DNS cache 64 stored in the security element 10 contains information that allows the FQDN to be resolved. The DNS cache 64 can comprise prestored information for a number of given FQDNs. In this manner it can be achieved that simply accessing the DNS cache 64 already makes it possible to set up a communication connection with external servers that are addressed via these given FQDNs. The DNS cache 64 stores information for different FQDNs in a conventionally known manner. That is, each FQDN has one or more IP addresses associated therewith. Each of these IP addresses in turn has a TTL entry associated therewith. This TTL entry specifies the "freshness" of the IP address, i.e. indicates how long the IP address can be regarded as valid.

In step S3, the DNS client 62 now checks whether there are stored for the requested FQDN one or more IP addresses that are still valid according to their TTL entry.

If this is the case, the DNS client 62 normally selects that IP address that can be regarded as the most current one on account of its TTL entry, as indicated with reference to step S5.1.

In case there are a plurality of IP addresses having the same TTL entry, the DNS client selects one of these IP addresses according to a given selection method, as indicated by step S5.2. A selection method preferably employed in this connection is for example a so-called round-robin method.

However, in the case indicated with reference to step S4 that no information is stored for the FQDN in the DNS cache 64, or if the IP addresses stored there for the FQDN are no longer current, the resolving of the FQDN is effected by means of a DNS request to a DNS server.

As mentioned hereinabove, at least one IP address of a DNS server is stored in the security element 10. The DNS client 62 opens therefor a BIP channel, as indicated with reference to step S4.1. Preferably, the DNS client 62 is arranged to support both commonly used communication protocols, TCP and UDP, via which a data communication between the end device and the external server can be carried out.

In step S4.2, the DNS client sends the DNS request for resolving the FQDN to the DNS server, as mentioned hereinabove.
Answer data obtained from the DNS server, i.e. one or more IP ad-dresses for the FQDN together with corresponding TTL entries, are stored by the DNS client 62 in the DNS cache 64, in step S4.3. In case no valid answer data is received, another DNS request can be sent to an alternative DNS server. If said another DNS request also fails, the routine is ended.

In step S4.4, the BIP channel via which the DNS request has been processed is closed.

In this case, too, the DNS client 62 can now continue as set forth hereinabove with reference to step S5, since the DNS cache 64 now comprises current information for the FQDN.

To enable the HTTPS request of the applet 61 to be sent to the external server - now on the basis of the IP address selected in step S5 for the FQDN - a BIP channel is opened again, preferably via TCP, in step S6. In case opening a BIP channel to the selected IP address is not successful, the selected IP address can be removed from the DNS cache and, if available, an alternative IP address is selected from the DNS cache.

In step S7, the HTTPS request is sent to the external server via this channel in the known manner on the basis of the IP address selected in step S5.

In case the HTTPS request to the external server fails, the DNS server 62 on the security element 10 can delete the corresponding IP address underlying the failed HTTPS request from the DNS cache 64.

The hereinabove method can be applied in the described manner in particular also when, deviating from the current specification of a BIP "OPEN CHANNEL" command, it can additionally be provided that a communication partner can be addressed not via a specific IP address, but via an FQDN, by way of such a command.

## Claims

1. A method for setting up a communication connection between a security element (10) within a mobile end device and an external server, wherein the external server is identified via an FQDN, comprising the steps of:
- making available a DNS client (62) in the security element (10);
- resolving (S2, S3, S4, S5) the FQDN into at least one IP address, employing the DNS client;
- setting up (S6, S7) the communication connection on the basis of one of the at least one IP address.

2. The method according to claim 1, **characterized in that** the DNS client resolves (S5) the FQDN on the basis of information stored in a DNS cache (64) in the security element (10).

3. The method according to claim 2, **characterized in that** the DNS cache (64) comprises prestored information for resolving given FQDNs.

4. The method according to any of claims 1 to 3, **characterized in that** the DNS client resolves (S4) the FQDN by the DNS client sending (S4.2) a DNS request to a DNS server.

5. The method according to claim 4, **characterized in that** the DNS request is sent (S4.1) to the DNS server via a BIP channel.

6. The method according to claim 4 or 5, **characterized in that** IP addresses of at least one DNS server are stored in the security element.

7. The method according to any of claims 1 to 6, **characterized in that** in case a plurality of IP addresses are stored for the FQDN in the DNS cache, or the DNS request yields a plurality of IP addresses for the FQDN, one IP address is selected (S5) from the plurality of IP addresses by the security element (10) according to given criteria.

8. The method according to claim 7, **characterized in that** an IP address is selected (S5.1) on the basis of a TTL entry associated with the IP address.

9. The method according to claim 7 or 8, **characterized in that** an IP address is selected (S5.2) on the basis of a given selection method, in particular a round-robin method.

10. The method according to any of claims 1 to 9, **characterized in that** the communication connection is set up (S1, S7) by an application (61) on the security element (10) by means of an HTTP(S) request.

11. A security element (10) for a mobile end device, comprising a DNS client (62) and a non-volatile memory (60) for including a DNS cache (64), wherein the security element (10) is arranged to carry out a method according to any of claims 1 to 10.

12. The security element (10) according to claim 11, **characterized in that** the security element (10) is arranged to be removably integrated into a mobile end device.

13. The security element (10) according to claim 11, **characterized in that** the security element is configured as an integral part of a mobile end device.

14. A mobile end device having a security element (10) according to either of claims 12 and 13.
